# EUROPEAN PATENT APPLICATION

(11) **EP 3 267 287 A1**
(43) Date of publication of application: **10.01.2018**
(21) Application number: 15883965.4
(22) Date of filing: 05.03.2015
(51) Int. Cl.: G06F 3/01

(54) **INPUT DETECTION METHOD, INPUT DETECTION PROGRAM, AND DEVICE**

(71) Applicant: Fujitsu Limited, Kawasaki-shi, Kanagawa 211-8588 (JP)
(72) Inventor: MATSUDA, Yugo, Kawasaki-shi Kanagawa 211-8588 (JP); TSUYUKI, Yasuhiro, Kawasaki-shi Kanagawa 211-8588 (JP); MORIDE, Shigeki, Kawasaki-shi Kanagawa 211-8588 (JP)
(74) Representative: Hoffmann Eitle
(86) International application number: PCT/JP2015/056510
(87) International publication number: WO 2016/139798

(57) **Abstract**

In an input detection method by a device to be worn on an arm by a band, output information of an acceleration sensor included in the device is acquired, and based on the output information, upon detecting a change corresponding to restraining by the band, the change is determined as an input.

## Description

### TECHNICAL FIELD

The present invention is related to an input detection method, a computer-readable recording medium, and a device for detecting an input of a user.

### BACKGROUND ART

In recent years, a small-scale device such as a watch type wearable terminal, which is capable of not only displaying information but also inputting information, has become widespread.

Since a watch type device or the like is limited in size, buttons and an input area used for inputs are limited. Therefore, conventionally, a technology for enabling input of vibrations to the device is known, in addition to an input surface such as a device touch panel or the like.

### RELATED-ART DOCUMENT

### PATENT DOCUMENT

Patent Document 1: Japanese National Publication of International Patent Application No. 2012-522324

### OVERVIEW OF THE INVENTION

### PROBLEMS TO BE SOLVED BY THE INVENTION

However, in a conventional watch type device, in a case of inputting vibration, since its size is minimized, compared with a larger device in size than the watch type device, a displacement or an acceleration received by the watch type device increases due to the vibration. Also, in the watch type device, by movements and the like such as moving a body part such as an arm apart from the vibration applied as the input, accelerations occur with various degrees and directions corresponding to usage.

As a result, it is difficult for the conventional watch type device to distinguish a change in the acceleration due to a regular usage and a change in the acceleration intended as an input.

In one aspect, an objective of a method, a program, and a device is to provide an input detection method, an input detection program, and a device capable of selectively determining an input as the input intended by a user.

### MEANS OF SOLVING THE PROBLEM

According to one aspect of an embodiment, there is provided an input detection method by a device to be worn on an arm by a band, the method including: acquiring output information of an acceleration sensor included in the device; and determining, based on the output information, upon detecting a change corresponding to restraining by the band, the change as an input.

The aforementioned steps may be performed by function parts realizing respective steps, a method by a computer to perform a process to realize the respective steps, and a computer-readable recording medium storing a program, which causes the computer to perform the process to realize the respective steps.

### EFFECTS OF THE INVENTION

It is possible to selectively determining an input as the input intended by a user.

### BRIEF DESCRIPTION OF DRAWINGS

FIG. 1 is a diagram for explaining a terminal apparatus of a first embodiment;
FIG. 2 is a diagram for explaining a state of inputting to a device of the first embodiment;
FIG. 3 is a diagram for explaining a case in which the vibration is applied as the input to the device of the first embodiment;
FIG. 4 is a diagram for explaining a restraint of the device by a belt;
FIG. 5 is a first diagram for explaining a reference waveform;
FIG. 6 is a second diagram for explaining the reference waveform;
FIG. 7 is a diagram for explaining the reference waveform data;
FIG. 8 is a diagram illustrating an example of a hardware configuration of the device;
FIG. 9 is a diagram for explaining the function of the device 200 of the first embodiment;
FIG. 10 is a flowchart for explaining an operation of the device of the first embodiment;
FIG. 11 is a diagram for explaining a fitting threshold;
FIG. 12 is a diagram for explaining the matching of the waveform;
FIG. 13 is a diagram for explaining an adjustment waveform;
FIG. 14 is a diagram for explaining a function of the device in a second embodiment;
FIG. 15 is a diagram illustrating an example of a screen prompting to input of waveform data, used to generate adjustment waveform data;
FIG. 16 is a flowchart for explaining an acquisition process of the adjustment waveform data in the second embodiment; and
FIG. 17 is a flowchart for explaining an operation of the device of the second embodiment.

### BEST MODE FOR CARRYING OUT THE INVENTION

### (First Embodiment)

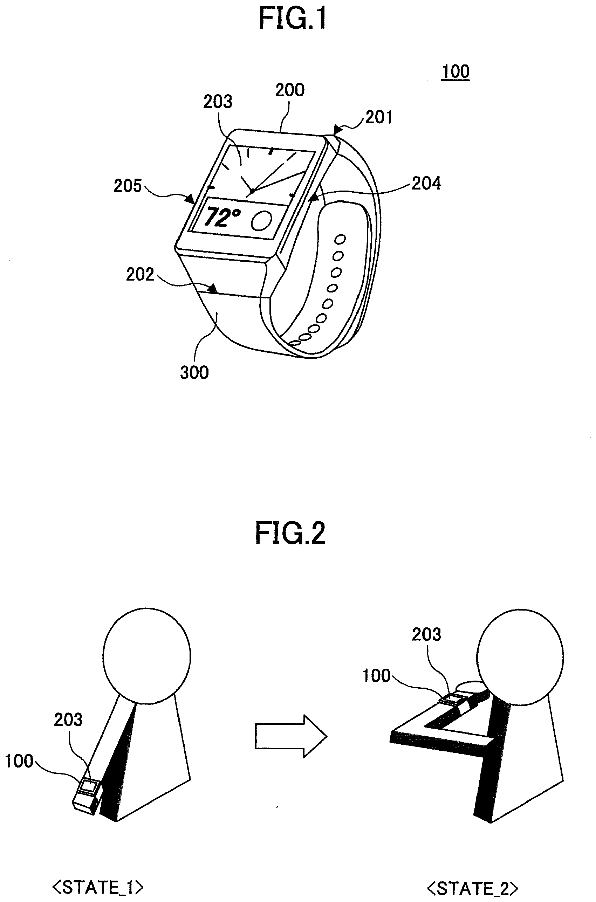

Embodiments are described with reference to drawings. FIG. 1 is a diagram for explaining a terminal apparatus of a first embodiment.

A terminal apparatus 100 of the first embodiment is a watch type wearable terminal, and includes a device 200, and a belt (band) 300.

In the device 200 of the terminal apparatus 100 of the first embodiment, one part (an upper side face) on a side face and another part (a lower side face) opposite to the one part are connected to an end portion of the belt 300. In an example in FIG. 1, one part of the side surface connected to the belt 300 is defined as an upper side surface 201 of the device 200, and another part at a position opposite to the upper side face 201 is defined as a lower side face 202 of the device.

For the device 200 of the first embodiment, a screen 203 is provided on a surface, which faces outside, when the device 200 is worn on an arm or the like of a user of the terminal apparatus 100. The screen 203 includes a display function for displaying various information items, and an input function for receiving an input to the device 200.

Also, the device 200 of the first embodiment receives vibrations applied to lateral faces 204 and 205 as inputs.

Next, referring to FIG. 2 through FIG. 4, a case will be described, in which the device 200 receives the input in a state in which the terminal apparatus 100 of the first embodiment is worn on the user.

FIG. 2 is a diagram for explaining a state of inputting to the device of the first embodiment. The terminal apparatus 100 of the first embodiment is the watch type as depicted in FIG. 2, for instance, and is worn on the arm of the user.

A state_1 illustrated in FIG. 2 represents that the user wears the terminal apparatus 100, and a position of the screen 203 is not fixed. That is, the state_1 is a state in which information displayed on the screen 203 is confirmed or a movement (for instance, walking or the like) occurs while the user wears the terminal apparatus 100.

A state_2 illustrated in FIG. 2 represents that the user wears the terminal apparatus 100, and the position of the screen 203 of the terminal apparatus 100 is fixed by the user. That is, the state_2 represents that the user views the screen 203 or the user attempts to conduct an operation such as the input or the like onto the screen 203.

When the user lifts his/her arm, and the position of the terminal apparatus 100 is moved from a position of the state_1 to a position of the state_2, the state_1 transitions to the state_2. The device 200 of the first embodiment detects a motion of the arm of the user based on the acceleration, an angle, and the like of the device 200 itself, and detects a transition from the state_1 to the state_2. Moreover, the device 200 of the first embodiment detects the transition from the state_2 to the state_1, whichever of the state_1 and the state_2 is a current state, or the like.

When detecting the transition from the state_1 to the state_2, the device 200 of the first embodiment may display predetermined information on the screen 203. The predetermined information may be information indicating time, or information set beforehand. Moreover, when detecting the transition from the state_2 to the state_1, the device 200 of the first embodiment may erase display on the screen 203. In the following explanation, the state_1 is called "regular motion state", and the state_2 is called "input preparation state".

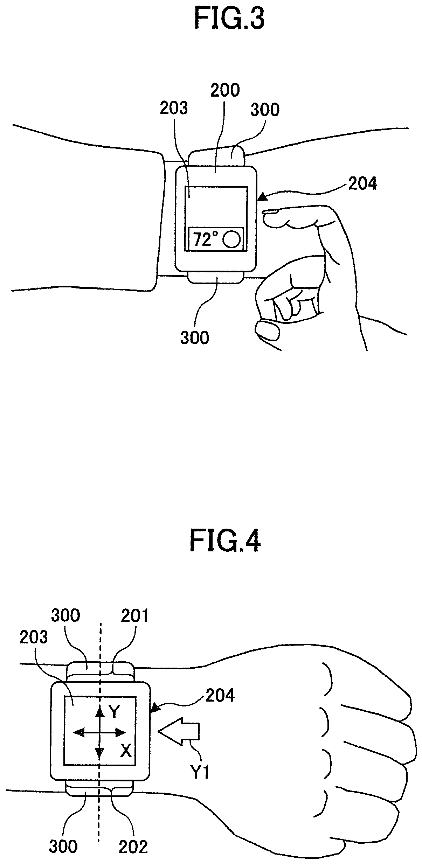

Next, referring to FIG. 3, a case will be described, in which the vibration to the device 200 of the first embodiment is input. FIG. 3 is a diagram for explaining a case in which the vibration is applied as the input to the device of the first embodiment.

The device 200 of the first embodiment receives the vibration, which is generated by the user tapping either one of the lateral face 204 or 205, as the input. The tap of the first embodiment represents an operation lightly hitting either one of the lateral faces 204 and 205 by a finger of the user.

FIG. 3 depicts a case in which the device 200 being in the input preparation state is tapped. In this case, since the device 200 is restrained to the arm of the user by the belt 300, vibration in a direction restraining the device by the belt 300 is restricted. With respect to the above, vibration in a direction orthogonal to the direction restraining the device 200 by the belt 300 has an effect of a rebound against restraint by the belt 300.

In the first embodiment, this point is focused on, and the vibration, in which the rebounding of the belt 300 is reflected, is detected as the tap. In detail, the device 200 of the first embodiment records the change in acceleration indicating the vibration in the direction orthogonal to the direction restraining the device 200 by the belt 300. When the change in the acceleration is detected to match the vibration indication reference waveform data, the change is detected as the tap.

In the following, referring to FIG. 4, the restraint of the device 200 by the belt 300 will be further described. FIG. 4 is a diagram for explaining the restraint of the device by the belt.

As illustrated in FIG. 4, the device 200 of the first embodiment is restrained by the belt 300 in a Y axis direction in coordinate axes for the device 200. Accordingly, when the device 200 receives an impact (the tap) in a Y1 arrow direction in this state, the motion (the vibration) in the Y axis direction is restrained.

In contract, with respect to the motion (the vibration) in an X axis direction of the device 200, when the impact (the tap) in the arrow Y1 direction is received, one motion in the Y1 arrow direction and another motion pulling back in an opposite direction to the Y1 arrow direction due to the restraint in the Y axis direction occur. Hence, in a case of tapping the device 200 of the first embodiment, the one motion in the Y1 arrow direction and the motion pulling back in the opposite direction to the Y1 arrow direction are alternately repeated in the vibration in the X axis direction of the device 200.

In the first embodiment, the waveform data indicating the change in the acceleration of the device 200 due to this vibration are recorded as the reference waveform data, it is determined by matching the change in the acceleration of the device 200 with the reference waveform data whether the vibration is caused by a tap, and the tap attempted by the user is selectively determined as the input.

That is, in the first embodiment, among the axes of the device 200, only the change in the acceleration in the X axis is referred to, and it is detected whether the vibration applied to the device 200 is a tap.

It is noted that the device 200 of the first embodiment may receive a tap as an operation corresponding to a backspace (Back Space) when the lateral face 204 is tapped.

It is noted that in the first embodiment, it is assumed that the device 200 is attached to a wrist of the user; however, a position at which the device 200 is attached is not limited to the wrist. For instance, the device 200 of the first embodiment may be attached to an upper arm, a forearm, or the like of the user.

It is noted that in a case of attaching the device 200 to the upper arm or the forearm, the orthogonal direction to the direction restraining the device 200 by the belt 300 is the X axis direction in the coordinate axes of the device 200.

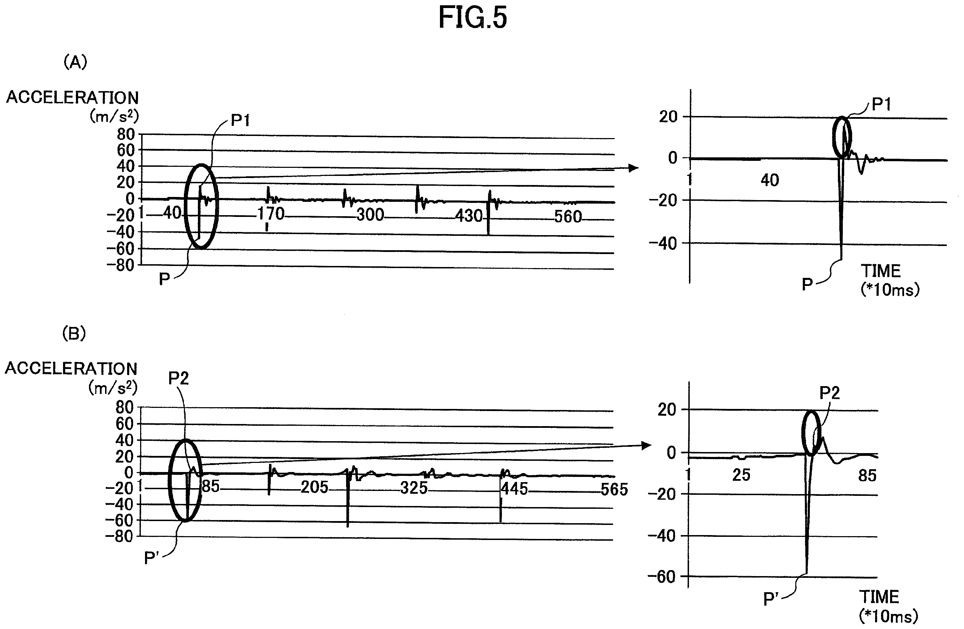

FIG. 5 is a first diagram for explaining a reference waveform. FIG. 5A illustrates a waveform representing the change in the acceleration when the device 200 is tapped in a state in which the device 200 is restrained by the belt 300. FIG. 5A illustrates the reference waveform, which is referred to for a detection of the tap to be described later.

FIG. 5B illustrates the waveform representing the change in the acceleration when the device 200 is tapped in a state in which the device 200 is not restrained by the belt 300. The state in which the device 200 is not restrained by the belt 300 corresponds to a state in which the terminal apparatus 100 is not attached to the user. In detail, for instance, the state may be a state in which the terminal apparatus 100 is placed on a palm of the user or on a desk.

Here, the reference waveform of the first embodiment will be described. In the first embodiment, a waveform in a case in which the device 200 receives the tap while being restrained by the belt 300 is defined as the reference waveform.

The reference waveform of the first embodiment is an ideal waveform representing the change in the acceleration of the device 200 in a case of tapping the device 200 in the state in which the terminal apparatus 100 is attached to the arm of the user. The reference waveform of the first embodiment is acquired as a result from conducting an experiment in which multiple users respectively wear and tap the device 200.

When the impact of the tap is applied to the device 200, the acceleration of the device 200 changes to a peak value P corresponding to a scale of the impact.

Next, in the waveform illustrated in FIG. 5A, the rebound occurs to an extent higher than or equal to the peak value P within a predetermined time after the impact is received. Then, the acceleration, attaining zero from a reverse direction, gradually converges to approach zero. In detail, in the waveform illustrated in FIG. 5A, the acceleration changes from the peak value P indicating the change at time of receiving the impact to a peak P1 in the reverse direction to that of the change by the impact within 0.1 msec. A change from the peak value P to the peak value P1 is caused by a motion, which pulls back the device 200 in the opposite direction to the direction in which the impact is applied due to the restraint by the belt 300 in the Y axis direction.

For instance, in the waveform in FIG. 5A, when |P| (an absolute value of the peak value P) represents the change in the acceleration by the impact, the change in the acceleration by being pulled back by the belt 300 becomes |P+P1|. Accordingly, in the waveform illustrated in FIG. 5A, there is the rebound higher than or equal to the change in the acceleration by the impact within a significantly short time after the impact is received.

With respect to the above, in the waveform in FIG. 5B, it takes 30 msec or more to change from a peak value P' indicating a change at the time of receiving the impact to a peak value P2 where the acceleration is in an opposite direction. Moreover, the peak value P2 is smaller than a peak value P1. Compared with the waveform illustrated in FIG. 5A, a change of the acceleration from the peak value P' is gentle.

As described above, when the tap is input, the acceleration of the device 200 changes differently depending on whether the device 200 is restrained by the belt 300. Accordingly, in the first embodiment, it is possible to discriminate the waveform in FIG. 5B from the reference waveform illustrated in FIG. 5A.

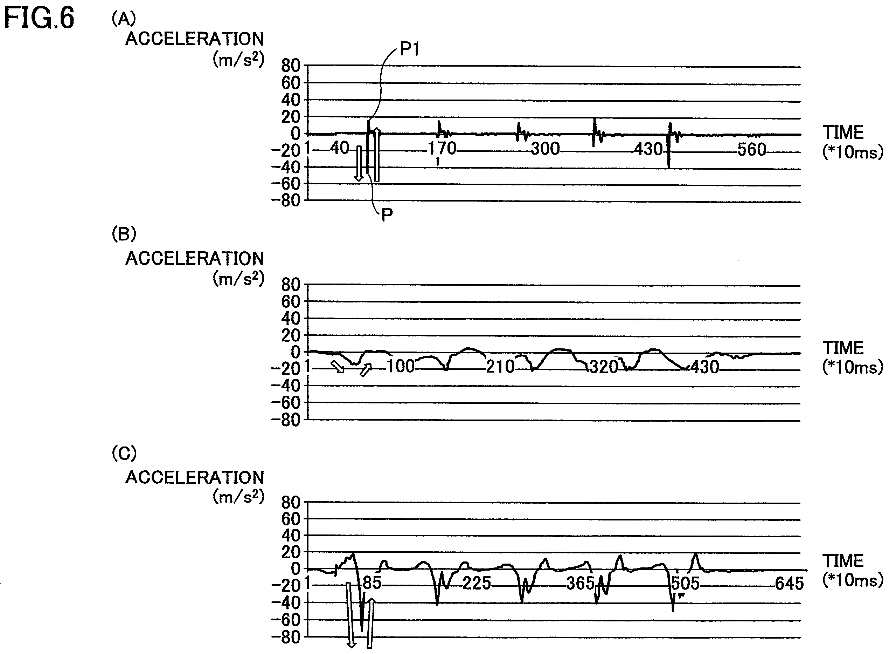

FIG. 6 is a second diagram for explaining the reference waveform. FIG. 6A illustrates the reference waveform, which is the same as the waveform illustrated in FIG. 5A.

FIG. 6B illustrates a waveform representing the change in the acceleration of the device 200 when the user wears the terminal apparatus 100 and walks. FIG. 6C illustrates a waveform representing the change in the acceleration of the device 200 when the user wears the terminal apparatus 100 and punches.

In a case in which the user walks, the acceleration of the device 200 changes gently depending on a swing of the arm.

Moreover, when the user punches with the arm wearing the terminal apparatus, the acceleration of the device 200 greatly changes. However, even in a motion of the punch, a motion of the arm is included in the change in the acceleration. Hence, compared with the tap directly applying the vibration to the device 200, the change in the acceleration becomes gentle.

Accordingly, a waveform, which represents the change in the acceleration when the user is walking or when the user punches, does not includes the waveform which represents a rebound higher than or equal to the change occurred by the impact within the significantly short time after the change in response to the impact as represented in the reference waveform.

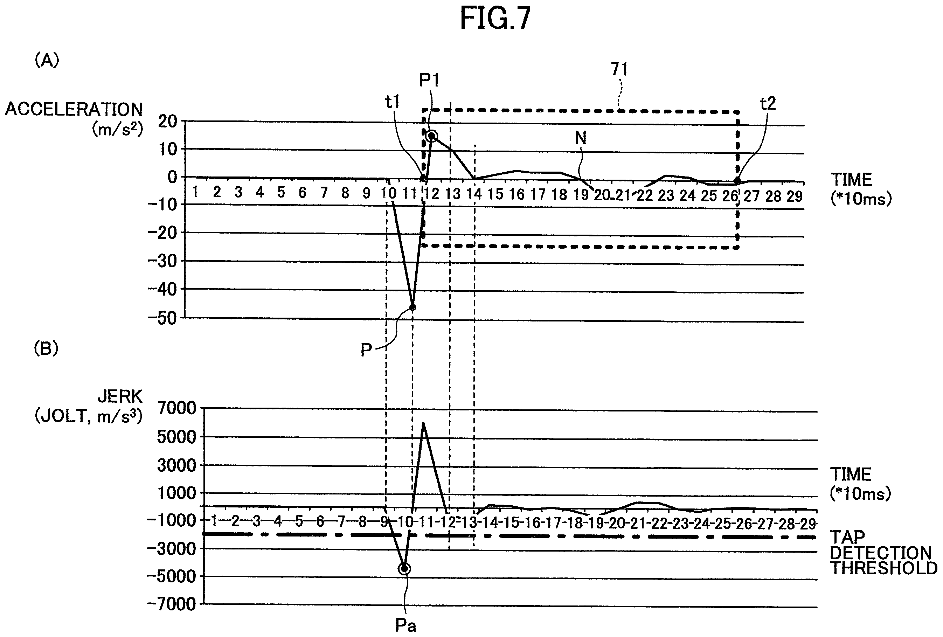

In the following, the reference waveform data will be described with reference to FIG. 7. FIG. 7 is a diagram for explaining the reference waveform data. FIG. 7A illustrates the reference waveform data, and FIG. 7B illustrates a change of a differential value corresponding to the reference waveform data.

In the input preparation state, in the reference waveform at the time when the device 200 receives the tap, the device 200 of the first embodiment defines a portion indicating a characteristic change of the acceleration indicating the vibration by the tap as the reference waveform.

More specifically, the device 200 of the first embodiment defines a waveform in a predetermined time from a point where the acceleration is 0, at time the acceleration is changing to the peak value P1 due to the rebound after the acceleration has changed to the peak value P in response to the impact.

That is, in the first embodiment, a waveform in the predetermined time as of a point where a value of the acceleration occurring in response to the impact initially becomes 0 is determined as the reference waveform data.

That is, reference waveform data N of the first embodiment is a waveform, which is extracted from time t1 when the value of the acceleration initially becomes 0 after the peak value P of the acceleration in response to the impact, to time t2 at the endpoint of the predetermined time, in the reference waveform.

In the reference waveform data N of the first embodiment, the change in the acceleration from the time t1 is the greatest, and after the time t1, the change in the acceleration does not exceed the change in the acceleration indicating the rebound. The change in acceleration from the time t1 is caused by the rebound against the impact which the device 200 receives.

Therefore, in the reference waveform data N of the first embodiment, an absolute value of a first peak value P1 of the acceleration from the time t1 where the acceleration is 0 is the greatest. After the first peak value P1, the absolute value of the acceleration does not exceed the absolute value of the peak value P1.

Also, in the first embodiment, in order to determine whether the change in the acceleration is caused by the impact of the tap, a tap detection threshold is set to the differential value of the acceleration illustrated in FIG. 7B.

In the first embodiment, when the differential value indicating the scale of the change in the acceleration is greater than the tap detection threshold, it is determined that this change in the accelerations is a change caused by the impact of the tap.

It is noted that in an example illustrated in FIG. 7B, the tap detection threshold is indicated as a negative value; however, the tap detection threshold may be set as an the absolute value. In this case, the tap detection threshold is compared with the absolute value of the acceleration.

The tap detection threshold of the first embodiment is a value acquired based on a result from conducting the experiment of tapping the device 200 in a state in which the user in actuality wears the terminal apparatus 100. A value regarded with respect to a fluctuation band of the acceleration due to the impact of the tap is set as the tap detection threshold.

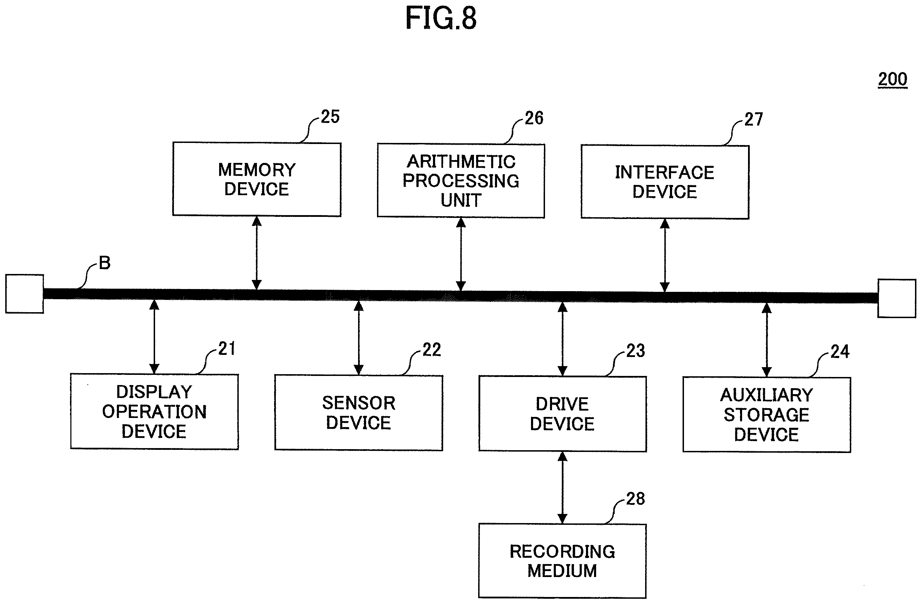

Next, the device 200 of the first embodiment will be described. FIG. 8 is a diagram illustrating an example of a hardware configuration of the device.

The device 200 includes a display operation device 21, a sensor device 22, a drive device 23, an auxiliary storage device 24, a memory device 25, an arithmetic processing unit 26, and an interface device 27, which are mutually connected via a bus B.

The display operation device 21 may be a touch panel or the like, and is used to input and display various signals. The sensor device 22 may include an acceleration sensor, a gyro sensor, or the like, for instance, and detects an angle, the acceleration, and the like of the device 200. The interface device 27 may include a modem, a LAN card, and the like, and is used to connect to a network.

The input detection program to be described later is at the least a part of various programs for controlling the device 200. For instance, the input detection program may be provided by a distribution of a recording medium 28 and by a download through the network. As the recording medium 28 recording the input detection program, various types of recording media may be used: a recording medium, which optically, electronically, or magnetically records information such as a CD-ROM, a flexible disk, a magnetic optical disk, or the like, a semiconductor memory, which electronically records information such as a ROM, a flash memory, or the like.

Also, when the recording medium 28 storing the input detection program is set to the drive device 23, the input detection program is installed into the auxiliary storage device 24 from the recording medium 28 through the drive device 23. The input detection program, which is downloaded from the network, is installed into the auxiliary storage device 24 through the interface device 27.

The auxiliary storage device 24 stores necessary files, data, and the like as well as the installed input detection program. The memory device 25 stores the input detection program, which is read out from the auxiliary storage device 24 when a computer is activated. Then, the arithmetic processing unit 26 realizes various processes to be described later, in accordance with the input detection program stored in the memory device 25.

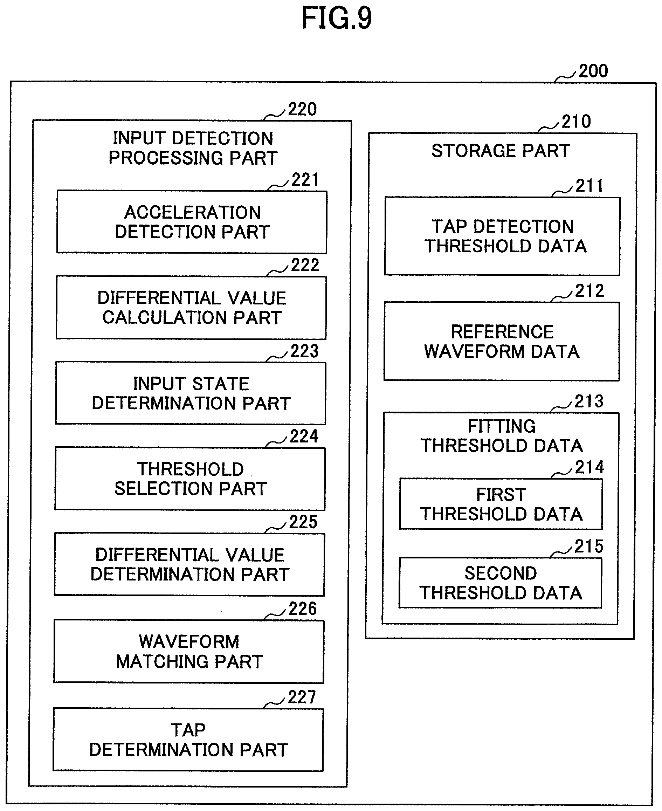

Next, referring to FIG. 9, functions of the device 200 of the first embodiment will be described. FIG. 9 is a diagram for explaining the functions of the device 200 of the first embodiment.

The device 200 of the first embodiment includes a storage part 210, and an input detection processing part 220. For instance, the storage part 210 of the first embodiment stores various information items to be described later, in storage areas provided in the memory device 25, the auxiliary storage device 24, and the like.

The input detection processing part 220 is realized by the arithmetic processing unit 26 executing the input detection program stored in the memory device 25 or the like.

The storage part 210 of the first embodiment stores tap detection threshold data 211, reference waveform data 212, fitting threshold data 213, and the like.

The tap detection threshold data 211 of the first embodiment is a threshold for determining whether the change in the acceleration of the device 200 is caused by the impact of the tap. The tap detection threshold data 211 is a threshold which is set beforehand.

The reference waveform data 212 is as described above, and is matched with the waveform data indicating change in the acceleration of the device 200 in response to an input.

The fitting threshold data 213 of the first embodiment is a threshold for determining whether the waveform data indicating the change in the acceleration of the device 200 indicates a vibration due to the tap. The fitting threshold data 213 of the first embodiment is compared with a fitting degree resulting from matching the reference waveform data 212 with the waveform data indicating the change in the acceleration of the device 200.

The fitting threshold data 213 of the first embodiment includes first threshold data 214 and second threshold data 215. A value indicated by the first threshold data 214 is set to be greater than a value indicated by the second threshold data 215.

In the following, a value indicated by the tap detection threshold data 211 may be called "tap detection threshold", and a value indicated by the fitting threshold data 213 may be called "fitting threshold". Also, in the following, values indicated by the first threshold data 214 and the second threshold data 215 may be called "first threshold" and "second threshold", respectively.

The input detection processing part 220 of the first embodiment detects an input to the device 200 by the vibration applied to the device 200.

The input detection processing part 220 of the first embodiment includes an acceleration detection part 221, a differential value calculation part 222, an input state determination part 223, a threshold selection part 224, a differential value determination part 225, a waveform matching part 226, and a tap determination part 227.

The acceleration detection part 221 detects the acceleration in the X axis direction of the device 200, which is detected by the sensor device 22 included in the device 200.

The differential value calculation part 222 calculates the differential value of the detected acceleration. The input state determination part 223 determines a state of the device 200. In detail, the input state determination part 223 determines, by the sensor device, whether the state of the device 200 is in the input preparation state (refer to FIG. 2).

The threshold selection part 224 selects and sets the fitting threshold in response to a determination result by the input state determination part 223.

The differential value determination part 225 determines whether the differential value of the acceleration calculated by the differential value calculation part 222 exceeds the tap detection threshold (the absolute value).

When it is determined by the differential value determination part 225 that the differential value of the acceleration exceeds the tap detection value, the waveform matching part 226 matches the reference waveform data 212 with the waveform data indicating the change in the acceleration due to the vibration applied to the device 200.

The tap determination part 227 determines whether the vibration applied to the device 200 is caused by the tap, in response to a comparison result between the fitting degree acquired by the waveform matching part 226 and the fitting threshold.

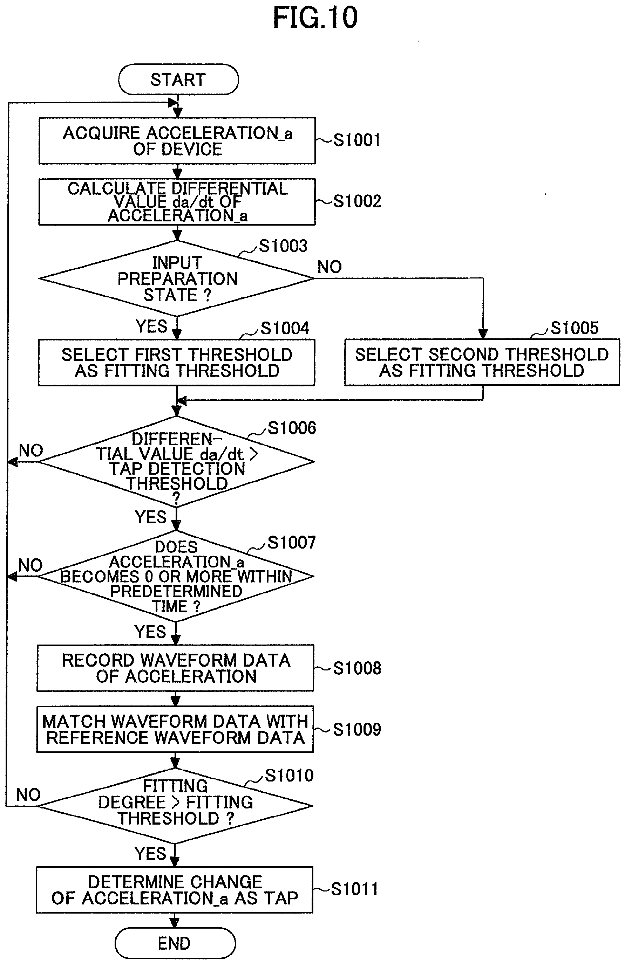

Next, referring to FIG. 10, an input detection process of the device 200 of the first embodiment will be described. FIG. 10 is a flowchart for explaining an operation of the device of the first embodiment.

The device 200 of the first embodiment acquires an acceleration_a of the device 200, which the sensor device 22 detects by the acceleration detection part 221 of the input detection processing part 220 (step S1001).

Next, the input detection processing part 220 calculates the differential value da/dt of the acquired acceleration_a by the differential value calculation part 222 (step S1002). Subsequently, the device 200 determines, by the input state determination part 223, whether the state of the device 200 is the input preparation state (step S1003) .

When the state of the device 200 is the input preparation state with respect to step S1003, the threshold selection part 224 sets the first threshold to the fitting threshold (step S1004), and advances to step S1006, which will be described later. When the state of the device 200 is not the input preparation state in step S1003, the threshold selection part 224 sets the second threshold to the fitting threshold (step S1005), and advances to step S1006, which will be described later.

That is, in the first embodiment, when the state of the device 200 is the input preparation state, the fitting threshold is set to be higher. When the state of the device 200 is the regular motion state, which is not the input preparation state, the fitting threshold is set to be lower than the case of the input preparation state.

Next, the input detection processing part 220 determines, by the differential value determination part 225, whether the differential value is greater than the tap detection threshold (step S1006).

When the differential value is less than or equal to the tap detection threshold in step S1006, the input detection processing part 220 goes back to step S1001.

When the differential value is greater than the tap detection threshold in step S1006, the input detection processing part 220 determines, by the waveform matching part 226, whether the acceleration_a becomes 0 or more within the predetermined time (step S1007). In the first embodiment, for instance, the predetermined time is set to be 30 msec.

When the acceleration_a does not become 0 within the predetermined time (step S1007), the input detection processing part 220 goes back to step S1001.

When the acceleration_a becomes 0 within the predetermined time (step S1007), the input detection processing part 220 records, by the waveform matching part 226, the waveform data representing the change in the acceleration of the device 200 due to the vibration (step S1008).

Next, the input detection processing part 220 matches, by the waveform matching part 226, the recorded waveform data with the reference waveform data 212 (step S1009). Subsequently, the input detection processing part 220 determines, by the tap determination part 227, whether the fitting degree between the recorded waveform data and the reference waveform data 212 is greater than the fitting threshold (step S1010). It should be noted that the matching of the waveform data by the waveform matching part 226 will be described later in detail.

When the fitting degree is greater than the fitting threshold in step S1010, the input detection processing part 220 determines, by the tap determination part 227, that the waveform data correspond to the reference waveform data 212. Next, the tap determination part 227 determines that the change in the acceleration_a detected by the device 200 is caused by the tap to the device 200 (step S1011), and terminates this process.

The fitting threshold of the first embodiment will be now described.

In the first embodiment, in response to whether the terminal apparatus 100 is in the input preparation state, the fitting threshold is modified.

When the terminal apparatus 100 is in the input preparation state, since the position of the screen 203 is fixed, it is predicted that a waveform indicating vibration due to the tap may become similar to the reference waveform. Hence, in the first embodiment, when the terminal apparatus 100 is in the input preparation state, the fitting threshold is set as the first threshold. When the terminal apparatus 100 is not in the input preparation state, that is, when the terminal apparatus 100 is in the regular motion state, the fitting threshold is set as the second threshold, being lower than the first threshold.

In the first embodiment, it is possible to improve a recognition accuracy of the tap by setting the fitting threshold as described above, regardless of the state of the device 200.

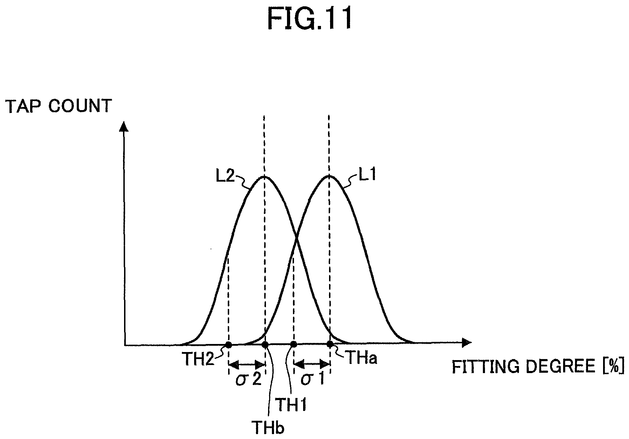

In the following, the fitting threshold of the first embodiment will be described with reference to FIG. 11. FIG. 11 is a diagram for explaining the fitting threshold. In FIG. 11, a method for setting the first threshold and the second threshold to be the fitting threshold of the first embodiment will be described.

A value acquired from a distribution of the fitting degree, which is obtained by an experiment of tapping the terminal apparatus 100 for the input preparation state is applied to the first threshold of the first embodiment. Also, a value acquired from a distribution of the fitting degree, which is obtained by an experiment of tapping the terminal apparatus 100 for the regular motion state is applied to the second threshold of the first embodiment.

A curve L1 depicted in FIG. 11 represents a distribution of the fitting degree of a result from comparing the waveform data, which is acquired by tapping the device 200 being in the input preparation state multiple times with the reference waveform data. Also, a curve L2 represents a distribution of the fitting degree of a result from comparing the waveform data, which is acquired by tapping the device 200 being in the regular motion state multiple times with the reference waveform data.

In FIG. 11, a fitting degree THa denotes an average value of a distribution L1, and σ1 denotes a standard deviation of the distribution L1. Also, a fitting degree THb denotes an average value of a distribution L2, and σ2 denotes a standard deviation of the distribution L2.

In the first embodiment, a fitting degree TH1, which is acquired by deducting a standard deviation σ1 from a fitting degree THa, is set to the first threshold, and a fitting degree TH2, which is acquired by deducting a standard deviation σ2 from a fitting degree THb, is set to the second threshold.

It is noted that when there is no input for a predetermined time after the device 200 becomes in the input preparation state, the fitting threshold may be changed from the first threshold to the second threshold.

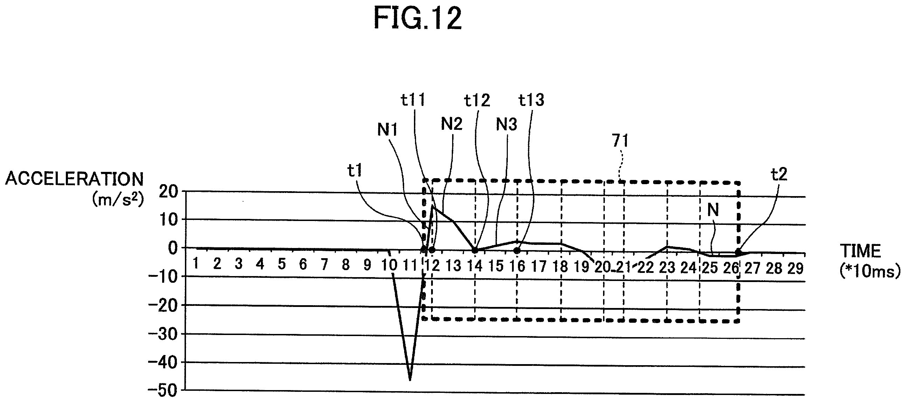

Next, the matching by the waveform matching part 226 will be described with reference to FIG. 12. FIG. 12 is a diagram for explaining the matching of the waveform.

In the first embodiment, for instance, the reference waveform data N may be divided into multiple sets of the waveform data, and the fitting threshold may be set for each of the multiple sets of the waveform data divided from the reference waveform data N.

FIG. 12 illustrates an example of dividing the reference waveform data N at time when a direction of the change in the acceleration changes.

In the first embodiment, the reference waveform data N is divided into such waveform data N1, N2, N3 as illustrated in FIG. 12.

The waveform data N1 corresponds to waveform data from time t1 to time t11. The time t11 is a time when the direction of the change in the acceleration is changed from positive to negative. The waveform data N2 corresponds to waveform data from time t11 to time t12. The time t12 is a time when the direction of the change in the acceleration is changed from negative to positive. The waveform data N3 corresponds to waveform data from time t12 to time t13. The time t13 is a time when the direction of the change in the acceleration is changed from positive to negative.

As described above, in the first embodiment, the waveform data are divided every time the direction of the change of the reference waveform data N is changed.

For instance, the fitting thresholds for the waveform data N1 and the waveform data N2, in which change due to the impact of the tap in the reference waveform data N is significantly apparent, may be set to be higher than the fitting threshold for the waveform data as of the waveform data N3.

Also, in the first embodiment, the first threshold and the second threshold may be set as a plurality of fitting thresholds for each of sets of the divided waveform data.

Moreover, in a case in which the fitting degree becomes greater than or equal to the fitting threshold for each of sets of the waveform data in all sets of the divided waveform data from the reference waveform data N, the waveform matching part 226 of the first embodiment may determine that the change in the acceleration_a detected by the device 200 is caused by the tap.

As described above, in the first embodiment, it is possible to distinguish between change in the acceleration or the like due to regular usage and change in the acceleration or the like for intended input, and to selectively determine an input as the input intended by a user.

### (Second Embodiment)

In the following, a second embodiment will be described with reference to drawings. The second embodiment differs from the first embodiment in that adjustment waveform data acquired from the vibration input by the user is referred to when matching the waveform data. In the following explanation of the second embodiment, only differences from the first embodiment will be described, such that parts that are the same as those in the first embodiment are given by the same reference numbers, and the explanations thereof will be omitted.

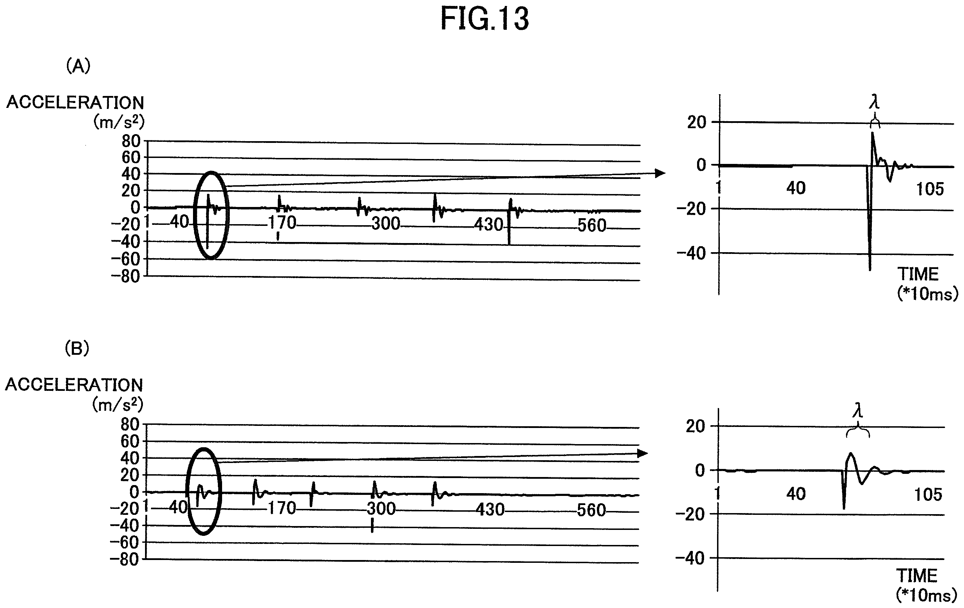

FIG. 13 is a diagram for explaining an adjustment waveform. FIG. 13A depicts a waveform indicating the change in the acceleration when the device 200 is tapped in a case of tightly fastening the belt 300. FIG. 13B depicts a waveform indicating the change in the acceleration when the device 200 is tapped in a case of loosely fastening the belt 300.

The vibration applied to the device 200 by the tap varies depending on a state of an attachment of the terminal apparatus 100 to the user. For instance, the vibration applied to the device 200 varies depending on a tightness of the belt 300.

It should be noted that a case of tightly fastening the belt 300 corresponds to a state in which the terminal apparatus 100 is fixed to the arm of the user when the user wears the terminal apparatus 100, and in which the motion in the Y axis direction of the device 200 is restricted. A case of loosely fastening the belt 300 corresponds to a state in which the device 200 is not fixed to the arm of the user when the terminal apparatus 100 is attached, a space exists between the arm of the user and the device 200, and the motion in the Y axis direction of the device 200 is not readily restricted.

In a case in which the user wears the terminal apparatus 100, when the belt 300 is tightly fastened, the force, with which the belt 300 constrains the device 200 in the Y axis direction becomes greater. Therefore, the impact applied to the device 200 by the tap is more greatly reflected by the change in the acceleration in the X axis direction. Therefore, the waveform indicating the change in the acceleration in this case becomes closer to the reference waveform.

Also, in a case in which the user wears the terminal apparatus 100, when the belt 300 is loosely fastened, the power constraining the device 200 by the belt 300 becomes smaller than a case of tightly fastening the belt 300. Accordingly, compared with the case of tightly fastening the belt 300, the change in the acceleration in the Y axis direction easily reflects the impact applied to the device 200 by the tap, and accordingly, the change in the acceleration in the X axis direction tends to become smaller.

Accordingly, the change in the acceleration of the waveform depicted in FIG. 13B is smaller than the waveform depicted in FIG. 13A. A wavelength *λ* is longer than the waveform depicted in FIG. 13A, and the change is moderate.

In the second embodiment, focusing on this point, in allowing the user to tap the device 200 in a state of wearing the terminal apparatus 100, an adjustment waveform is acquired whereby the manner in which the user wears the terminal apparatus 100 and the like are reflected. Therefore, in the second embodiment, instead of the reference waveform, the adjustment waveform is used in the matching by the waveform matching part 226, and a discrepancy in an accuracy of an input detection of the tap in response to the user is restricted, such that the accuracy of the input detection is maintained.

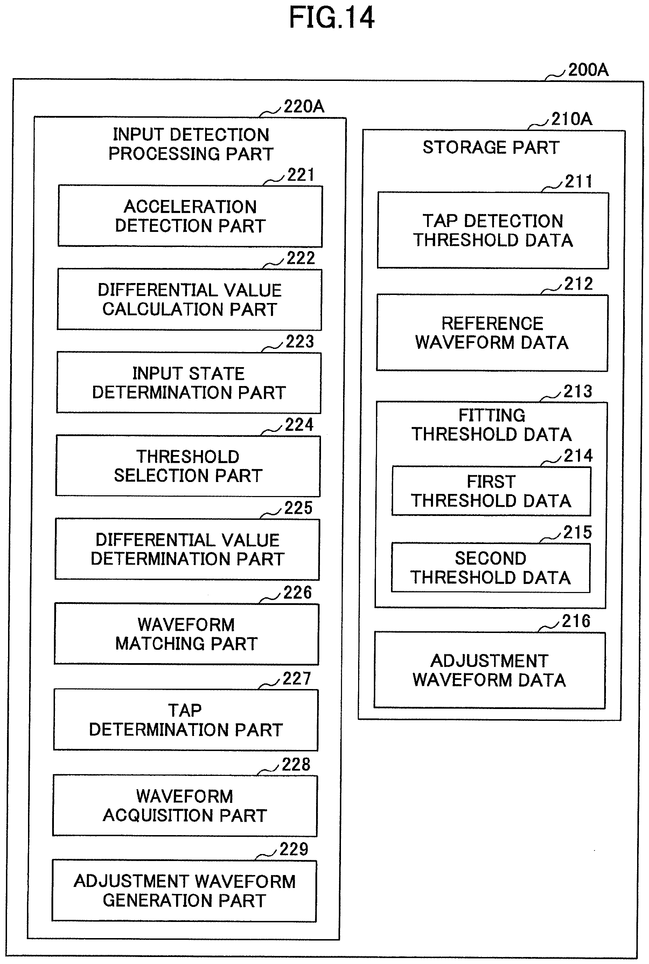

FIG. 14 is a diagram for explaining functions of the device in the second embodiment. The device 200A of the second embodiment includes a storage part 210A, and an input detection process part 220A.

The storage part 210A of the second embodiment stores the tap detection threshold data 211, the reference waveform data 212, the fitting threshold data 213, and adjustment waveform data 216.

The adjustment waveform data 216 of the second embodiment are acquired by an acquisition process of the adjustment waveform data to be described later, and stored in the storage part 210A.

The input detection process part 220A of the second embodiment includes a waveform acquisition part 228 and an adjustment waveform generation part 229, in addition to the parts 221 through 227 of the input detection processing part 220 of the first embodiment.

The waveform acquisition part 228 of the second embodiment acquires the change in the acceleration by the vibration input to the device 200 as the waveform data. The adjustment waveform generation part 229 of the second embodiment generates the adjustment waveform data 216 indicating the adjustment waveform from the acquired waveform data.

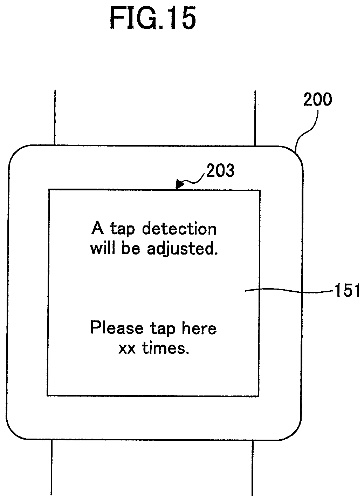

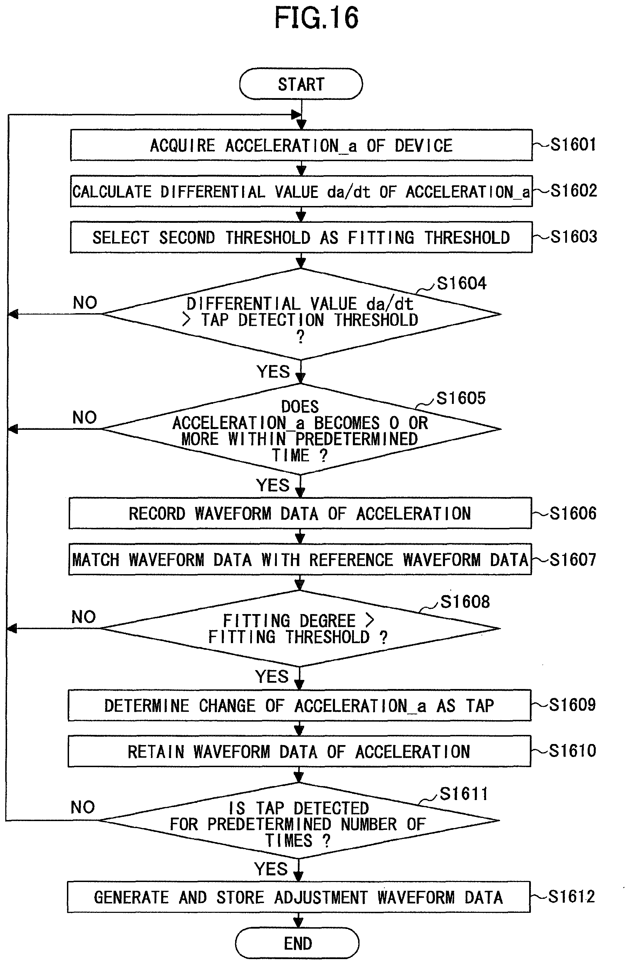

In the following, the acquisition process of the adjustment waveform data of the second embodiment will be described with reference to FIG. 15 and FIG. 16.

FIG. 15 is a diagram illustrating an example of a screen prompting to input of waveform data, used to generate the adjustment waveform data.

The device 200A of the second embodiment, for instance, displays a message prompting multiple taps on the screen 203, in response to receiving an operation for acquiring the adjustment waveform data.

When the input of the vibration is received on the screen 203 in a state of displaying a message as illustrated in FIG. 15, the device 200A of the second embodiment starts the acquisition process of the adjustment waveform data.

FIG. 16 is a flowchart for explaining the acquisition process of the adjustment waveform data in the second embodiment.

Processes in steps S1601 and S1602 in FIG. 16 are similar to those in steps S1001 and S1002 in Fig. 10, and the explanation thereof will be omitted.

Next, in the input detection processing part 220A of the second embodiment, the threshold selection part 224 selects a value indicated by the second threshold data 215 as the fitting threshold (step S1603).

Processes in steps S1604 through S1609 in FIG. 16 are similar to those in steps S1003 through S1008 in FIG. 10, and the explanations thereof will be omitted.

Next, the input detection processing part 220A retains the waveform data indicating the change in the acceleration, which is determined as the tap by the waveform acquisition part 228 (step S1610). Subsequently, the input detection processing part 220A determines, by the adjustment waveform generation part 229, whether a predetermined number of times of the tap is detected (step S1611).

When the predetermined number of times of the tap has not been detected (step S1611), the input detection processing part 220A goes back to step S1601.

When the predetermined number of times of the tap is detected (step S1611), the input detection processing part 220A determines, by the adjustment waveform generation part 229, the adjustment waveform data 216 from the waveform data for the predetermined count, and stores the adjustment waveform data 216 in the storage part 210 (step S1612). In detail, the adjustment waveform generation part 229 of the second embodiment may store an average of sets of the waveform data excluding the waveform data having a lowest fitting degree in the waveform data for the predetermined count as the adjustment waveform data 216.

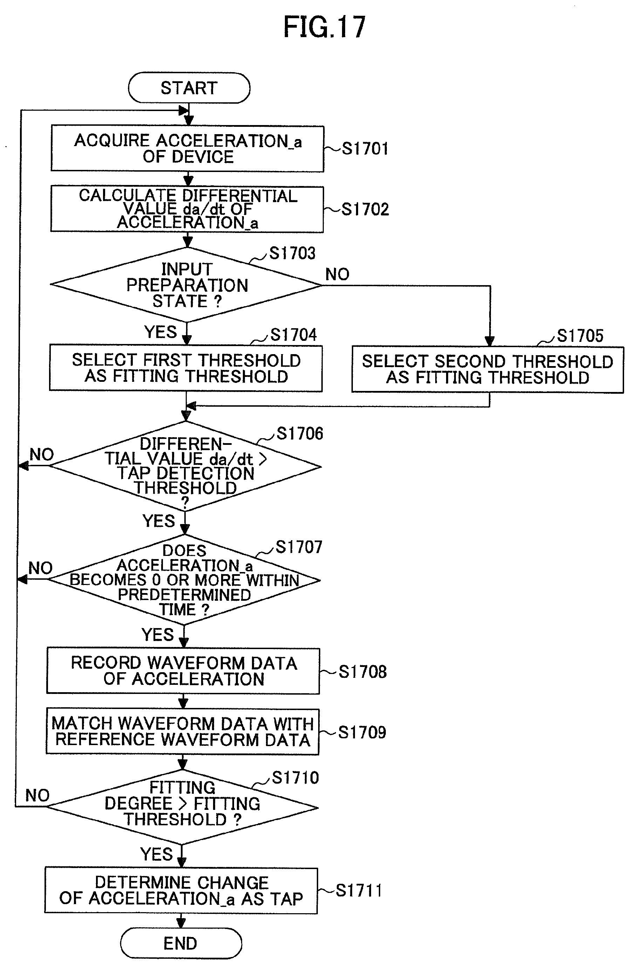

Next, the input detection process of the device 200A of the second embodiment will be described with reference to FIG. 17. FIG. 17 is a flowchart for explaining an operation of the device of the second embodiment.

Processes from step S1701 to step S1708 in FIG. 17 are similar to processes from step S1001 to step S1008 in FIG. 10, and the explanation thereof will be omitted.

Following step S1708, the input detection processing part 220A matches, by the waveform matching part 226, the recorded waveform data with the adjustment waveform data 216 (step S1709).

Next, the tap determination part 227 determines whether the fitting degree between the recorded waveform data and the adjustment waveform data 216 is greater than the fitting threshold (step S1710) .

When the fitting degree is greater than the fitting threshold (step S1710), the input detection processing part 220A regards, by the tap determination part 227, the waveform data as corresponding to the adjustment waveform data. Then, the tap determination part 227 determines that the change in the acceleration_a detected by the device 200 is caused by the tap to the device 200 (step S1711), and terminates this process.

As described above, in the second embodiment, it is determined whether the tap is input as the adjustment waveform depending on the manner in which the user wears the terminal apparatus 100; hence, regardless of the manner in which the terminal apparatus 100 is worn, it is possible to selectively determine an input as the input intended by the user.

It is noted that the process of the input detection in the above described embodiments is performed by the device 200 included in the terminal apparatus 100 being the watch type; however, it is not limited thereto. For instance, the process of the input detection of each of the embodiments may be conducted by a smartphone or the like capable of being fixed onto the arm or the like of the user. Moreover, the process of the input detection may be performed by an IC (Integrated Circuit) or the like included in the device 200.

The present invention is not limited to the specifically disclosed embodiments, and various modifications and changes are possible without departing from the scope of the claims.

### EXPLANATION OF REFERENCE NUMERALS

- 100: terminal apparatus
- 200, 200A: device
- 201: upper side surface
- 202: lower side face
- 203: screen
- 204, 205: lateral face
- 210, 210A: storage part
- 211: tap detection threshold data
- 212: reference waveform data
- 213: fitting threshold data
- 214: first threshold data
- 215: second threshold data
- 216: adjustment waveform data
- 220, 220A: input detection processing part
- 221: acceleration detection part
- 222: differential value calculation part
- 223: input state determination part
- 224: threshold selection part
- 225: differential value determination part
- 226: waveform matching part
- 228: waveform acquisition part
- 229: adjustment waveform generation part
- 300: belt

## Claims

1. An input detection method by a device to be worn on an arm by a band, the method comprising:
acquiring output information of an acceleration sensor included in the device; and
determining, based on the output information, upon detecting a change corresponding to restraining by the band, the change to be an input.

2. The input detection method as claimed in claim 1, wherein upon determining that the device is in an input preparation state, a threshold used for the detection is set to be different in a case in which the device is in a state other than the input preparation state.

3. The input detection method as claimed in claim 2, wherein the change represents a change in an orthogonal direction with respect to a direction of the restraining of the device by the band.

4. The input detection method as claimed in claim 3, wherein the change represents a vibration due to an impact applied to the device in which the vibration alternately repeats a motion of the device moving in the orthogonal direction due to an impact applied to the device and a motion of the device being pulled back, due to the restraining by the band in an opposite direction with respect to the direction in which the device is moved.

5. The input detection method as claimed in claim 4, wherein the input preparation state indicates a state in which a position of the device is fixed by the arm.

6. The input detection method as claimed in any one of claims 1 through 3, further comprising detecting the change corresponding to the restraining by the band based on a result from matching a reference waveform with a change of the output information of the acceleration sensor.

7. The input detection method as claimed in claim 6, wherein the change of the input information of the acceleration sensor depending on a strength of the restraining by the band is determined as the reference waveform.

8. The input detection method as claimed in any one of claims 1 through 7, wherein the device is attached to a wrist by the band.

9. The input detection method as claimed in any one of claims 1 through 7, wherein the device is attached to an upper arm by the band.

10. An input detection program that causes a device to be worn on an arm by a band to execute a process comprising:
acquiring output information of an acceleration sensor included in the device; and
determining, based on the output information, upon detecting a change corresponding to restraining by the band, the change as an input.

11. A device to be worn on an arm by a band, the device comprising:
an acquisition part configured to acquire output information of an acceleration sensor included in the device; and
a determination part configured to determine, based on the output information, upon detecting a change corresponding to restraining by the band, the change as an input.
